# EUROPÄISCHE PATENTSCHRIFT

(11) **EP 2 713 061 B1**
(45) Veröffentlichungstag und Bekanntmachung des Hinweises auf die Patenterteilung: **13.12.2017**
(21) Anmeldenummer: 12186838.4
(22) Anmeldetag: 01.10.2012
(51) Int. Cl.: F16B 5/02, F16B 5/06, F16B 21/16

(54) **Verschluss und Verkleidungssystem hiermit**
Closure and cladding system with same
Fermeture et système d'habillage pour celle-ci

(43) Veröffentlichungstag der Anmeldung: 02.04.2014
(73) Patentinhaber: Fairchild Fasteners Europe - Camloc GmbH, 65779 Kelkheim (Taunus) (DE)
(72) Erfinder: Blancke, Stefan, 65779 Kelkheim (DE); Scheinberger, Marcus, 65719 Hofheim-Langenhain (DE)
(74) Vertreter: Keil & Schaafhausen Patent- und Rechtsanwälte PartGmbB

(56) Entgegenhaltungen:
- EP-A2- 0 145 238
- DE-C- 537 517
- DE-U1-202008 002 633
- GB-A- 2 201 727
- JP-A- 2001 182 726
- US-A1- 2007 087 612
- US-A1- 2009 110 477

## Beschreibung

Die Erfindung betrifft einen Verschluss zum lösbaren Verbinden zweier Bauteile sowie ein Verkleidungssystem mit einem solchen Verschluss.

Aus der DE 20 2009 017 354 U1 ist ein gattungsgemäßer Verschluss bekannt, der zum Verbinden von wenigstens zwei Bauteilen als ein Kugelsperrbolzen ausgebildet ist. Wenigstens eines der Bauteile ist mit einer Befestigungsöffnung versehen. Der Verschluss hat eine Hülse, die eine Längsachse aufweist und in welcher ein Sperrbolzen koaxial angeordnet und verschiebbar geführt ist. Dabei weist der Sperrbolzen wenigstens eine Ausnehmung und die Hülse wenigstens eine seitliche Öffnung auf, die derart ausgebildet und einander zugeordnet sind, dass wenigstens eine Kugel aus einer Freigabeposition, in welcher die wenigstens eine Kugel in der Ausnehmung des Sperrbolzens aufgenommen ist, ohne wesentlich aus der seitlichen Öffnung der Hülse zu ragen, in eine Sperrposition überführbar ist, in welcher die wenigstens eine Kugel aus der seitlichen Öffnung der Hülse herausragt. Die Hülse ist dabei wenigstens bereichsweise in einer Abdrückhülse aufgenommen, die relativ zu der Hülse zwischen einer die wenigstens eine Kugel in ihrer Freigabeposition haltenden ersten Stellung und einer zweiten Stellung verschiebbar ist, in welcher die wenigstens eine Kugel in der Sperrposition aus der seitlichen Öffnung der Hülse herausragen kann.

Derartige Kugelsperrbolzen werden zum schnellen Fixieren, Verbinden und Sichern von Einzelteilen oder Werkstücken eingesetzt. Eine typische Anwendung sind Lagerbolzen, die häufig montiert und wieder demontiert werden müssen. Durch das Drücken des meist gefederten Sperrbolzens werden die Kugeln oder dergleichen Sperrelemente entriegelt und verriegeln beim Loslassen des Sperrbolzens selbsttätig wieder, wobei die Kugeln oder dergleichen dann nach außen gedrängt werden, um die miteinander zu verbindenden Bauteile zu hintergreifen und dadurch zu verbinden. Kugelsperrbolzen zeichnen sich dabei durch eine kompakte Bauweise aus. In der Praxis werden Kugelsperrbolzen für Anwendungen eingesetzt, bei denen das Öffnen eines Verschlusses sicher verhindert werden soll.

Ein weiterer Kugelsperrbolzen ist aus der DE 202 12 656 U1 bekannt, wobei ein Gewindebolzen eine radial bewegliche Kugel enthält, die über einen zentralen Sperrbolzen ge- oder entsperrt werden kann. Hierdurch kann der Gewindebolzen axial an einer Mutter befestigt werden, um ein ungewolltes Lösen, bspw. durch Vibrationen, zu verhindern.

Die US 2009/110477 A1 beschreibt einen Verschluss mit einem Verriegelungszapfen, welcher eine umlaufende Nut zeigt, und mit zwei Sperrelementen, wobei für das erste Sperrelement Kugeln beschrieben werden, welche im geschlossenen Zustand des Verschlusses in der umlaufenden Nut des Verriegelungszapfens gehalten werden. Dies wird durch ein zweites Sperrelement erreicht, welches mit einer Feder beaufschlagt ist. Zum Öffnen des Verschlusses beschreibt die US 2009/110477 A1 das Einführen von Luft oder Flüssigkeit unter Druck in einen Raum zwischen Gehäuse und zweitem Sperrelement.

Aus der DE 537 517 C ist ebenfalls ein Verschluss bekannt, welcher mit einem Verriegelungszapfen, einer umlaufenden Nut, einem ersten Sperrelement in Form von Kugeln und einem zweiten mit einer Feder beaufschlagten Sperrelement ausgestaltet ist.

Auch die GB 2 201 727 A offenbart einen solchen Verschluss. Es wird weiterhin ein Ver- und Entriegelungsmechanismus beschrieben, welcher über eine hydraulische Verschiebung des zweiten Sperrelements in geschlossenem Zustand eine radiale Bewegung der beschriebenen Kugeln aus der umlaufenden Nut des Verriegelungszapfens verhindert, und im geöffneten Zustand erlaubt.
Aufgabe der Erfindung ist es demgegenüber einen Verschluss und ein Verkleidungssystem mit einem solchen Verschluss bereitzustellen, welche ein rasches befestigendes Verkleidungssystem sowie ein Ablösen des Verkleidungssystems ermöglichen. Nach einer weiteren Aufgabe der Erfindung soll der Verschluss bei Überschreiten einer vorgegebenen Kraft selbsttätig öffnen.
Diese Aufgabe wird erfindungsgemäß im Wesentlichen mit einem Verschluss nach Anspruch 1 gelöst. Der Verschluss zur lösbaren Verbindung von Bauteilen weist hierzu nach einer Ausführungsform einen Verriegelungszapfen, ein Gehäuse, eine Aufnahme, wenigstens ein erstes Sperrelement, ein zweites Sperrelement und eine Feder auf. Der Verriegelungszapfen weist eine erste Vertiefung sowie Mittel auf, die zur Verbindung mit einem ersten der zu verbindenden Bauteile geeignet sind. Auch das Gehäuse weist derartige Mittel zur Verbindung mit einem zweiten der zu verbindenden Bauteile auf. Die Aufnahme ist in dem Gehäuse angeordnet. Die Aufnahme ist mit wenigstens einer zweiten Vertiefung sowie mit einer Öffnung versehen, in die der Verriegelungszapfen einsteckbar ist. Die Haupterstreckungsrichtung der Öffnung, in die der Verriegelungszapfen einsteckbar ist, liegt dabei vorzugsweise quer zu der zweiten Vertiefung. Das erste Sperrelement ist nach einer bevorzugten Ausführungsform eine Kugel. Dieses wenigstens eine erste Sperrelement kann wahlweise in eine oder beide der Vertiefungen eingreifen. Wenn das erste Sperrelement in beide Vertiefungen, d.h. in die Vertiefung des Verriegelungszapfens und in die Vertiefung der Aufnahme eingreift, sind diese miteinander verriegelt, d.h. bspw. in axialer Richtung nicht relativ zueinander verschiebbar. Das zweite Sperrelement ist in dem Gehäuse angeordnet und in der Aufnahme beweglich aufgenommen und wird durch die Feder beaufschlagt. Das zweite Sperrelement kann dabei mit dem ersten Sperrelement zusammenwirken, um dieses in einer Verriegelungsstellung zu halten. Das zweite Sperrelement ist aus einer das erste Sperrelement in Eingriff mit beiden Vertiefung bringenden Verriegelungsstellung gegen die Kraft der Feder in eine Freigabestellung bewegbar, in der das erste Sperrelement mit einer der Vertiefung außer Eingriff treten kann. In der Freigabestellung ist es somit möglich, dass der Verriegelungszapfen relativ zu der Aufnahme in axialer Richtung bewegt wird, da das wenigstens eine erste Sperrelement nicht mehr in beide Vertiefungen gleichzeitig eingreift. Nach einer ersten Ausführungsform weist der Verschluss zur lösbaren Verbindung von Bauteilen einen Verriegelungszapfen, der wenigstens eine erste Vertiefung und Mittel zur Verbindung mit einem ersten Bauteil aufweist, ein Gehäuse, eine in dem Gehäuse angeordnete Aufnahme, die wenigstens eine zweite Vertiefung sowie eine Öffnung aufweist, in die der Verriegelungszapfen eingesteckt werden kann, wenigstens ein erstes Sperrelement, das in der wenigstens einen zweiten Vertiefung aufgenommen und zum Arretieren des Verriegelungszapfens in der Aufnahme lösbar in Eingriff mit der wenigstens einen ersten Vertiefungen gebracht werden kann, ein zweites Sperrelement, das in dem Gehäuse und/oder der Aufnahme beweglich aufgenommen ist, und eine das zweite Sperrelement beaufschlagende Feder auf, wobei das zweite Sperrelement aus einer das erste Sperrelement in Eingriff mit der wenigstens einen ersten Vertiefung bringenden Verriegelungsstellung gegen die Kraft der Feder in eine Freigabestellung bewegt werden kann, in der das erste Sperrelement mit dem Verriegelungszapfen, insbesondere der wenigstens einen ersten Vertiefung, außer Eingriff treten kann. Anders als bei bekannten Kugelsperrbolzen erfolgt die Verriegelung damit in umgekehrter Richtung radial nach innen zwischen der z.B. hülsenartigen Aufnahme und dem Verriegelungszapfen. Zudem ist es gegenüber den eine Verbindung gegen selbsttätiges Öffnen sichernden Kugelsperrbolzen mit dem erfindungsgemäßen Verschluss möglich, dass das erste Sperrelement, bspw. eine Kugel, mit der wenigstens einen ersten Vertiefung des Verriegelungszapfens entgegen der Vorspannkraft der Feder außer Eingriff treten kann, wodurch sich der Verschluss bei Überschreiten einer von der Federkraft abhängigen (axialen) Belastung selbsttätig definiert und zerstörungsfrei öffnet.

Nach einer bevorzugten Ausführungsform der Erfindung ist die in dem Verriegelungszapfen vorgesehene erste Vertiefung eine umlaufende Nut. Wenn das wenigstens eine erste Sperrelement als eine Kugel ausgebildet ist, kann diese unabhängig von der Ausrichtung der Verriegelungszapfens in Drehrichtung in die umlaufende Nut eingreifen um in der Verriegelungsstellung den Verriegelungszapfen mit der Aufnahme zu verbinden. Die wenigstens eine in der Aufnahme vorgesehene zweite Vertiefung ist dabei vorzugsweise eine Durchgangsöffnung, die bspw. zylindrisch sein kann. Mit anderen Worten kann eine Kugel oder dergleichen erstes Sperrelement in dieser Durchgangsöffnung so angeordnet sein, dass die Kugel in der Freigabestellung zumindest auf der dem Verriegelungszapfen zugewandten Seite nicht aus der zweiten Vertiefung herausragt und andererseits in der Verriegelungsstellung soweit aus der zweiten Vertiefung herausragt, dass die Kugel in die umlaufende Nut des Verriegelungszapfens eingreifen kann.

Hierzu kann die Aufnahme eine innere Hülse aufweisen, die die Öffnung definiert, in welche der Verriegelungszapfen gesteckt wird, und in der die wenigstens eine zweite Vertiefung vorgesehen ist. Zusätzlich kann die Hülse einen radial nach außen ragenden Flansch zur Befestigung der Aufnahme in dem Gehäuse aufweisen. Es wird besonders bevorzugt, wenn die Aufnahme zusätzlich eine die innere Hülse zumindest bereichsweise umgreifende äußere Hülse aufweist, die mit dem Gehäuse verbunden ist. Dies kann insbesondere über eine Gewindeverbindung erfolgen. In einem zwischen der inneren Hülse und der äußeren Hülse ausgebildeten Ringraum ist dann vorzugsweise das zweite Sperrelement (axial) verschiebbar geführt. Aufgrund dieser Führung kann das zweite Sperrelement durch die Kraft der Feder oder gegen die Kraft der Feder bewegt werden. Die Gewindeverbindung zwischen dem Gehäuse und der Aufnahme ermöglicht ist es, die Position der Aufnahme innerhalb des Gehäuses einzustellen. Dies ist insbesondere für das unten näher beschriebene selbsttätige Lösen des Verschlusses und Einstellen der Vorspannkraft der Feder hilfreich. Alternativ sind auch andere Möglichkeiten der Befestigung der Aufnahme in dem Gehäuse möglich. Die Feder, die das zweite Sperrelement beaufschlagt, ist eine sich an dem zweiten Sperrelement und an dem Gehäuse abstützende Druckfeder. Hierzu können an dem zweiten Sperrelement und/oder an dem Gehäuse entsprechende Anlageflächen für die Feder vorgesehen sein. Das zweite Sperrelement kann bspw. topfartig mit einer Hülse, die mit dem wenigstens einen ersten Sperrelement zusammenwirkt, und einem nach innen ragenden Flansch oder Boden ausgestattet sein. Dieser Flansch oder Boden dient einerseits als Auflagefläche für die Feder und kann andererseits von einem Werkzeug genutzt werden, um das zweite Sperrelement gegen die Kraft der Feder zu bewegen, um so den Verschluss zu öffnen. Die Anbindung des Verriegelungszapfens an das erste Bauteil kann auf unterschiedliche Weise erfolgen. So kann der Verriegelungszapfen bspw. in das erste Bauteil eingeschraubt sein oder über eine Schraub- oder Nietverbindung an diesem befestigt sein. Nach einer bevorzugten Ausführungsform ist der Verriegelungszapfen über ein Gewinde mit einem Aufnahmefuß verbunden, der wiederrum an dem ersten Bauteil befestigt ist. Dies kann bspw. über Durchgangsöffnungen für eine Schraub- oder Nietverbindung erfolgen.

In gleicher Weise kann auch das Gehäuse auf unterschiedliche Weise mit dem zweiten Bauteil verbunden sein. So ist es möglich, das Gehäuse in das zweite Bauteil einzuschrauben. Vorzugsweise ist das Gehäuse über die Aufnahme mit dem zweiten Bauteil verbunden. Hierzu kann die Aufnahme mit einem Flansch versehen sein, an dem sich eine Scheibe bzw. ein mit Flügeln versehener Ring abstützt, der über Durchgangsöffnungen, bspw. mittels einer Schraub- oder Nietverbindung, an dem zweiten Bauteil befestigt werden kann. Hierdurch kann auch eine schwimmende Lagerung des Gehäuses und der Aufnahme an dem zweiten Bauteil realisiert werden.

Um den Verschluss zu lösen, d.h. um den Verriegelungszapfen aus dem Gehäuse und der Aufnahme entfernen zu können, sind der Verriegelungszapfen und der ggf. vorgesehene Aufnahmefuß vorzugsweise mit einer axialen Durchgangsöffnung versehen. Durch eine solche Durchgangsöffnung kann ein stiftartiges Werkzeug geführt werden, welches das zweite Sperrelement gegen die Kraft der Feder axial bewegt, so dass das erste Sperrelement (Kugel) außer Eingriff mit den Verriegelungszapfen treten kann.

Wenn die wenigstens eine zweite Vertiefung des zweiten Sperrelements eine Führungskontur aufweist, die bei einer auf das zweite Sperrelement oder auf den Verriegelungszapfen wirkenden Axialkraft eine radiale Bewegungskomponente des wenigstens eines ersten Sperrelements bewirkt, kann das bspw. als eine Kugel ausgestaltete erste Sperrelement durch eine axiale Bewegung des zweiten Sperrelements, z.B. radial nach innen, in die Verriegelungsstellung gedrängt werden. Gleichzeitig ermöglicht eine solche Führungskontur auch, dass das wenigstens eine erste Sperrelement sich zum Lösen des Verschlusses radial nach außen bewegen kann, wenn das zweite Sperrelement gegen die Kraft der Feder bewegt wird. Erfindungsgemäß weist die wenigstens eine erste Vertiefung des Verriegelungszapfens eine Führungskontur auf, die bei einer auf dem Verriegelungszapfen wirkenden Axialkraft eine radiale Bewegungskomponente des wenigstens einen ersten Sperrelement bewirkt. Mit einer solchen Ausgestaltung des Verschlusses ist es möglich, dass dieser sich selbsttätig öffnet, sobald eine vorgegebene Axialkraft überschritten wird. Die Führungskontur kann bspw. eine Abschrägung oder Fase sein, die so gestaltet ist, dass bspw. eine Kugel als erstes Sperrelement radial nach außen gedrängt wird, wenn eine Zugkraft auf den Verriegelungszapfen wirkt. Überschreitet diese Zugkraft einen vorgegebenen oder vorstellbaren Wert, wird die Kugel radial nach außen gedrängt, wobei das zweite Sperrelement gegen die Kraft der Feder bewegt wird. Wenn die Aufnahme wie oben beschrieben über eine Gewindeverbindung in dem Gehäuse befestigt ist, kann durch eine Drehung der Aufnahme relativ zu dem Gehäuse die Vorspannung der auf das zweite Sperrelement wirkenden Feder verändert werden, wodurch die Axialkraft, bei welcher der Verschluss selbsttätig öffnet, eingestellt werden kann.
Um das Lösen des Verschlusses mittels eines Werkzeugs zu erleichtern, kann ein zusätzliches elastisches Element vorgesehen sein, welches zur Erzeugung einer auf den Verriegelungszapfen wirkenden Axialkraft zwischen diesem und der Aufnahme angeordnet ist. Dieses zusätzliche elastische Element bewirkt, dass wenn das zweite Sperrelement mittels eines Werkzeugs gegen die Kraft der Feder bewegt wird, der Verriegelungszapfen aus der Aufnahme gezogen wird. Hierdurch wird verhindert, dass das zweite Sperrelement durch die Kraft der Feder wieder in seine Verriegelungsposition zurückgeführt wird, ohne dass der Zapfen aus der Aufnahme gezogen werden kann. Ein solches elastisches Element kann zusätzlich auch Vibrationen oder dergleichen zwischen den beiden zu verbindenden Bauteilen reduzieren.

Nach einer besonders bevorzugten Ausführungsform der Erfindung ist der Verschluss als ein zweiteiliges Verschlusselement ausgebildet, wobei ein Verriegelungsbolzen mit einem Hinterschnitt in einem Gegenhalter einrasten kann. Der Gegenhalter enthält wenigstens ein Sperrelement, z.B. eine Kugel, die von einer Feder vorgespannt ist und in den Hinterschnitt des Verriegelungsbolzens eingreifen kann. Aufgrund von Schrägen, an denen sich das wenigstens eine Sperrelement abstützt, kann eine maximale Haltekraft definiert werden, bei deren Überschreiten das zweiteilige Verschlusselement selbsttätig öffnet, über eine optional vorgesehene Innenbohrung in dem Verriegelungsbolzen kann das zweiteilige Verschlusselement auch manuell betätigt bzw. geöffnet werden. Diese Ausgestaltung hat dabei den Vorteil, dass das Verschlusselement bei einer bestimmten, vorgegebenen Kraft selbsttätig öffnet. Ein solcher Verschluss kann verdeckt montiert werden, so dass er von einer Sichtseite bspw. einer Innenverkleidung nicht sichtbar ist. Der Verschluss kann durch eine einfach "Klick-Montage" geschlossen bzw. befestigt werden.

Die der Erfindung zugrunde liegende Aufgabe wird darüber hinaus von einem Verkleidungssystem gelöst, das bspw. als Innenverkleidung für ein Fahrzeug oder Flugzeug ausgestaltet sein kann. Ein solches Verkleidungssystem weist eine Tragstruktur als ein erstes Bauteil und wenigstens eine Verkleidungsplatte als ein zweites Bauteil auf, die miteinander über einen Verschluss der oben genannten Art verbindbar sind. Das Gehäuse des Verschlusses ist dabei über die Aufnahme sowie ggf. Flügel an der Tragstruktur befestigt und der Verriegelungszapfen ist an der Verkleidungsplatte befestigt. Vorzugsweise ist ein elastisches Element unter Vorspanndung der Tragstruktur und der Verkleidungsplatte angeordnet. Dieses kann folglich Vibrationen dämpfen und damit ein Klappern verhindern und andererseits das Lösen des Verschlusses bei einer manuellen Betätigung vereinfachen.

Die Erfindung wird nachfolgend anhand von Ausführungsbeispielen unter Bezugnahme auf die Zeichnungen näher erläutert.

Es zeigen:
- Figur 1: in Schnittansicht die beiden Baugruppen des Verschlusses vor ihrer Verbindung,
- Figur 2: in Schnittansicht den verbundenen Zustand der Baugruppen nach Figur1,
- Figur 3: in vergrößerter Darstellung ein Detail aus Figur 2,
- Figur 4: den Verschluss nach Figur 2 zusammen mit einem Werkzeug zum Lösen des Verschlusses,
- Figur 5: in Perspektivansicht die Baugruppen nach Figur 1,
- Figur 6: in teilweise geschnittener Perspektivansicht die Baugruppen nach Figur 1,
- Figur 7: in Draufsicht Teile des Verschlusses nach Figur 1,
- Figur 8: in teilweise geschnittener Perspektivansicht die Baugruppen nach Figur 1, und
- Figur 9: ein erfindungsgemäßes Verkleidungssystem mit einem Verschluss nach Figur 2.

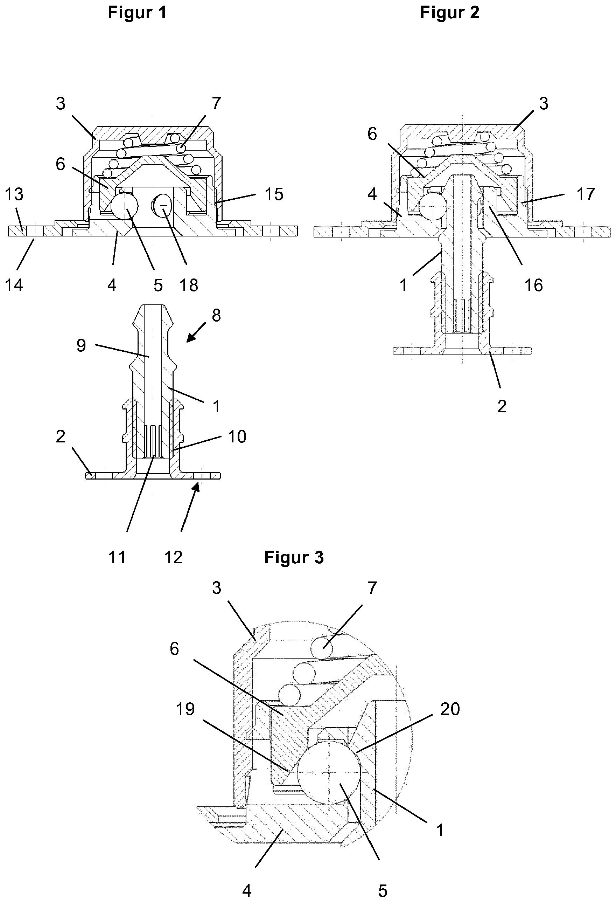

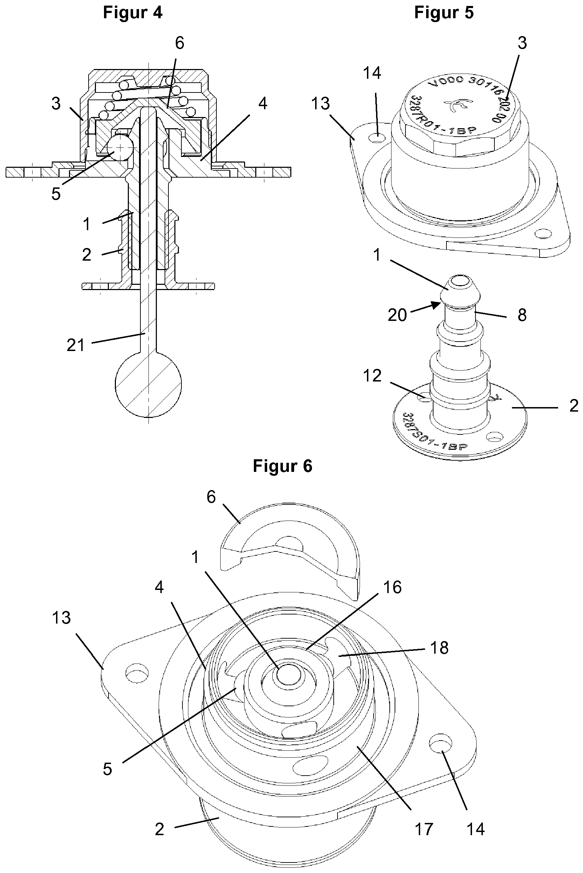

Der in den Figuren 1 bis 5 dargestellte Verschluss besteht im Wesentlichen aus zwei Baugruppen, die in den Figuren 1 und 5 getrennt voneinander dargestellt sind. Die erste Baugruppe bildet dabei der in Figur 1 unten dargestellte Verriegelungszapfen 1, der in der den Figuren dargestellten Ausführungsform mit einem Aufnahmefuß 2 verbunden ist. Die zweite Baugruppe umfasst ein napfartige Gehäuse 3, eine Aufnahme 2, die in dem Gehäuse 3 gehalten ist, ein als eine Kugel 5 ausgebildetes erstes Sperrelement, ein bspw. ebenfalls napfartiges zweites Sperrelement 6 sowie eine Druckfeder 7.

Der Verriegelungszapfen 1 ist ein stiftförmiges Element, das an seinem in Figur 1 oberen Ende eine nutartige Vertiefung 8 aufweist. Der Verriegelungszapfen 1 ist zudem hohl ausgebildet und weist eine sich in dessen Längsrichtung erstreckende Durchgangsöffnung 9 auf. An seinem in Figur 1 unteren Ende ist der Verriegelungszapfen 1 mit einem Außengewinde 10 versehen, welches in ein entsprechendes Innengewinde des Aufnahmefußes 2 eingreift. An dem in Figur 1 unteren Ende ist in der Durchgangsöffnung 9 ein Innenprofil 11, bspw. ein Mehrkantprofil, ausgebildet, über welches der Verriegelungszapfen 1 relativ zu dem Aufnahmefuß verstellbar ist. Auf diese Weise lässt sich die Höhe, mit welcher der Verriegelungszapfen 1 aus dem Aufnahmefuß 2 herausragt, einstellen. Der Aufnahmefuß 2 ist in der dargestellten Ausführungsform mit zwei Öffnungen 12 versehen, so dass der Aufnahmefuß an einem Bauteil befestigbar ist.

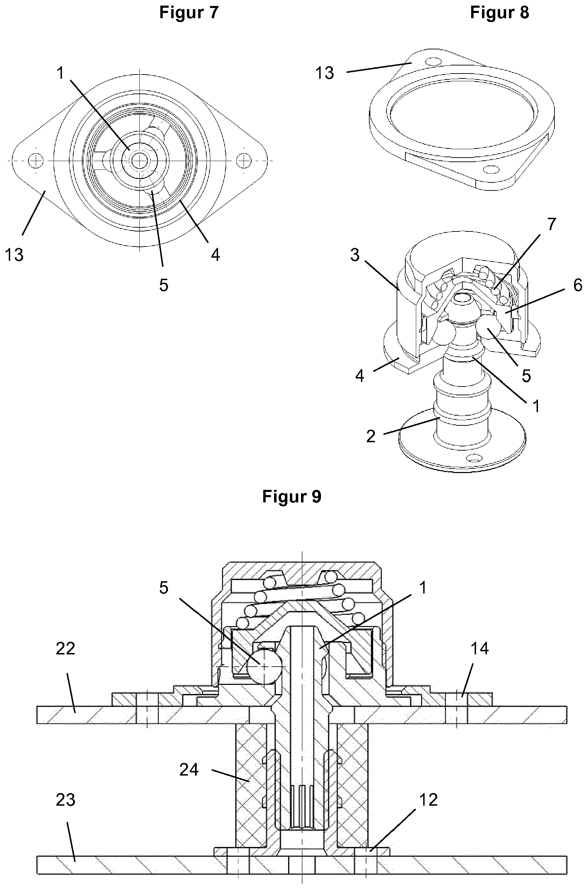

Die Aufnahme 4 weist, wie auch aus Figur 8 ersichtlich ist, einen umlaufenden Flansch auf, auf dem sich ein Ring mit zwei flanschartigen Flügeln 13 abstützt. In den Flügeln 13 ist jeweils eine Öffnung 14 ausgebildet, über welche die Aufnahme schwimmend an einem Bauteil befestigbar ist. Auf seiner Innenseite ist das Gehäuse 3 bereichsweise mit einem Gewinde 15 versehen, über welches die Aufnahme 4 in das Gehäuse 3 eingeschraubt ist. Die axiale Position (Höhenrichtung in Figur 1) der Aufnahme 4 innerhalb des Gehäuses 3 ist somit definiert veränderbar. Die Aufnahme 4 ist dabei mit einer inneren Hülse 16 und einer äußeren Hülse 17 ausgestaltet, die über einen Bodenbereich so miteinander verbunden sind, dass zwischen der inneren Hülse 16 und der äußeren Hülse 17 ein Ringförmiger Freiraum entsteht, in welchem das zweite Sperrelement 6 axial verschiebbar geführt ist. Die innere Hülse 16 bildet eine zentrale Öffnung, in welche der Verriegelungszapfen 1 einsteckbar ist. In der inneren Hülse 16 sind mehrere zylindrische Bohrungen 18 ausgebildet, die Vertiefungen zur Aufnahme der Kugeln 5 bilden.

Wie insbesondere aus der vergrößerten Darstellung der Figur 3 ersichtlich ist, ist das zweite Sperrelement 6 auf seiner in Figur 1 unteren Seite mit einer Schräge 19 versehen, an der die Kugeln 5 (erste Sperrelemente) anliegen. In gleicher Weise ist auch die Vertiefung 8 des Verriegelungszapfens 1 mit einer Schräge 20 versehen, die an den Kugeln 5 anliegt, wenn der Verschlusszapfen 1 wie in Figur 2 dargestellt in die Aufnahme 4 eingerastet ist.

Zur Verbindung der beiden Baugruppen wird der Verriegelungszapfen 1 in die durch die innere Hülse 16 gebildete Öffnung der Aufnahme 4 eingeführt. Durch den Druck der Feder 7 ist das zweite Sperrelement 6 dabei zunächst in Figur 1 nach unten gedrängt, wodurch unter Einwirkung der Schräge 19 die ersten Sperrelemente 5, d.h. die Kugeln, radial nach innen gedrängt werden, so dass diese wie in Figur 1 gezeigt bereichsweise aus den Öffnungen 18 heraustreten. Das Einführen des Verriegelungszapfens 1 drängt die Kugeln 5 dabei radial nach außen, so dass aufgrund der Schräge 19 das zweite Sperrelement 6 gegen die Kraft der Feder verschoben wird. Diese Kraft bewirkt auch, dass die Kugeln 5 von dem zweiten Sperrelement 6 wieder radial nach innen gedrängt werden, wenn die in den Figuren 2 und 3 gezeigte Position des Verriegelungszapfens 1 erreicht ist, so dass die Kugeln 5 bereichsweise in die nutartige Vertiefung 8 eingreifen können. In der in den Figuren gezeigten Ausführungsform wäre es in dieser Verriegelungsstellung zwar noch möglich, den Verriegelungszapfen 1 weiter in die Aufnahme 4 hineinzuschieben, ein Herausziehen des Verriegelungszapfens 1 wird durch die Kugeln 5 jedoch verhindert, die weiterhin in den Öffnungen 8 gehalten sind und sich an der Schräge 20 der nutartigen Vertiefung 8 abstützen.

Zum Öffnen des Verschlusses kann das in Figur 4 gezeigte stiftartige Werkzeug 21 in die Durchgangsöffnung 12 des Verriegelungszapfens 1 gesteckt werden. Das Werkzeug 21 drückt dann mit seiner in Figur 4 oberen Spitze gegen den (oberen) Boden des zweiten Sperrelements 6 und drückt dieses gegen die Kraft der Feder nach oben. Hierdurch wird die Schräge 19 von den Kugeln 5 abgehoben, so dass diese radial nach außen treten können. Wird nun an dem Verriegelungszapfen 1 gezogen (in der Figur nach unten), so kann dieser aus der Aufnahme 4 gelöst werden, da die Schräge 20 in der Vertiefung 8 die Kugeln 5 radial nach außen drängen kann. Eine weitere Alternative den Verschluss zu öffnen ergibt sich aus der Geometrie der Schrägen 19 und 20. In Abhängigkeit der Kraft der Feder 7 kann durch eine Axialkraft, die auf den Verriegelungszapfen 1 wirkt (in den Figuren nach unten) der Verschluss ohne das Werkzeug 21 gelöst werden, indem die Kugeln 5 durch die Schräge 20 radial nach außen gedrängt werden, wodurch durch die Schräge 19 das zweite Sperrelement 6 gegen die Kraft der Feder 7 nach oben gedrückt wird. Die Kraft, bei welcher dieses selbsttätige Öffnen des Verschlusses erfolgt, kann über das Gewinde 15 eingestellt werden, in dem die Vorspannkraft der Feder 7 durch die axiale Position der Aufnahme 4 innerhalb des Gehäuses 3 verändert wird.

In Figur 9 ist ein Anwendungsbeispiel des Verschlusses der Figur 1 bis 5 gezeigt, wobei ein Verkleidungssystem angedeutet ist, das aus einer plattenartigen Tragstruktur 22 und einer Verkleidungsplatte 23 besteht. Der Verschluss dient dabei zur Verbindung der Verkleidungsplatte 23 an der Tragstruktur 22. Das Gehäuse 3 des Verschlusses ist dabei wie durch die Löcher in der Tragstruktur angedeutet bspw. über eine Schraub- oder Nietverbindung an der Tragstruktur 22 fixiert. Eine Öffnung in der Tragstruktur 22 fluchtet mit der durch die innere Hülse gebildeten Öffnung der Aufnahme 4. Der Aufnahmefuß 2 ist in ähnlicher Weise an der Verkleidungsplatte 23 fixiert. In dem Beispiel nach Figur 9 ist ein zusätzliches Federelement 24 als eine den Verriegelungszapfen 1 und den Aufnahmefuß 2 umgebende Hülse vorgesehen, die sich an dem Aufnahmefuß 2 und der Tragstruktur 22 abstützt. Bei einem Aufrasten der Verkleidungsplatte 23 mit dem Verriegelungszapfen 1 an die Tragstruktur 22 wird hierdurch das Federelement 24 vorgespannt, so dass Vibrationen zwischen der Tragstruktur und der Verkleidungsplatte gedämpft werden. Zudem erleichtert das Federelement 24 das Lösen des Verschlusses, wenn das Werkzeug 21 eingesetzt wird.

### Bezugszeichen:

- 1: Verriegelungszapfen
- 2: Aufnahmefuß
- 3: Gehäuse
- 4: Aufnahme
- 5: Kugel (erstes Sperrelement)
- 6: zweites Sperrelement
- 7: Feder
- 8: Vertiefung
- 9: Durchgangsöffnung
- 10: Gewinde
- 11: Innenprofil
- 12: Öffnung
- 13: Flügel
- 14: Öffnung
- 15: Gewinde
- 16: Innere Hülse
- 17: Äußere Hülse
- 18: Öffnung
- 19: Schräge (Führungskontur)
- 20: Schräge
- 21: Werkzeug
- 22: Tragstruktur (zweites Bauteil)
- 23: Verkleidungsplatte (erstes Bauteil)
- 24: elastisches Element

## Patentansprüche

1. Verschluss zur lösbaren Verbindung von Bauteilen (22, 23) mit
- einem Verriegelungszapfen (1), der wenigstens eine erste Vertiefung (8) und Mittel (2, 12) zur Verbindung mit einem ersten Bauteil (23) aufweist,
- einem Gehäuse (3),
- einer in dem Gehäuse (3) angeordneten Aufnahme (4), die wenigstens eine zweite Vertiefung (18) sowie eine Öffnung aufweist, in die der Verriegelungszapfen (1) einsteckbar ist,
- wenigstens einem ersten Sperrelement (5), das in der wenigstens einen zweiten Vertiefung (18) aufgenommen und zum Arretieren des Verriegelungszapfens (1) in der Aufnahme (4) lösbar in Eingriff mit der wenigstens einen ersten Vertiefungen (8) bringbar ist,
- einem zweiten Sperrelement (6), das in dem Gehäuse (3) und/oder der Aufnahme (4) beweglich aufgenommen ist, und
- einer das zweite Sperrelement (6) in eine erste Richtung beaufschlagende Feder (7),
wobei das zweite Sperrelement (6) in eine der ersten Richtung entgegengesetzte zweite Richtung aus einer das erste Sperrelement (5) in Eingriff mit der wenigstens einen ersten Vertiefung (8) bringenden Verriegelungsstellung gegen die Kraft der Feder (7) in eine Freigabestellung bewegbar ist, in der das erste Sperrelement (5) mit der wenigstens einen ersten Vertiefung (8) außer Eingriff treten kann,
wobei das zweite Sperrelement (6) eine Führungskontur (19) aufweist, die bei einer auf das zweite Sperrelement (6) in die erste Richtung wirkenden Axialkraft eine radiale Bewegungskomponente des wenigstens einen ersten Sperrelements (5) bewirkt,
und wobei die wenigstens eine erste Vertiefung (8) des Verriegelungszapfens (1) eine Führungskontur (20) aufweist, die bei einer auf den Verriegelungszapfen (1) wirkenden Zugkraft eine radiale Bewegungskomponente des wenigstens einen ersten Sperrelements (5) bewirkt,
**dadurch gekennzeichnet, dass**
die Feder (7) eine sich an dem zweiten Sperrelement (6) und an dem Gehäuse (3) abstützende Druckfeder ist,
und dass, wenn die Zugkraft einen vorgegebenen Wert überschreitet, das wenigstens eine erste Sperrelement (5) radial nach außen gedrängt wird, wobei das zweite Sperrelement (6) gegen die Kraft der Feder (7) in die zweite Richtung bewegt wird, wodurch sich der Verschluss selbsttätig öffnet, sobald die vorgegebene Zugkraft überschritten wird.

2. Verschluss nach Anspruch 1, **dadurch gekennzeichnet, dass** die in dem Verriegelungszapfen (1) vorgesehene erste Vertiefung eine umlaufende Nut (8) ist.

3. Verschluss nach Anspruch 1 oder 2, **dadurch gekennzeichnet, dass** die wenigstens eine in der Aufnahme (4) vorgesehene zweite Vertiefung eine, insbesondere zylindrische, Durchgangsöffnung (18) ist.

4. Verschluss nach einem der vorhergehenden Ansprüche, **dadurch gekennzeichnet, dass** die Aufnahme (4) eine innere Hülse (16) aufweist, die die Öffnung definiert und in der die wenigstens eine zweite Vertiefung (18) vorgesehen ist.

5. Verschluss nach Anspruch 4, **dadurch gekennzeichnet, dass** die Hülse (16) einen radial nach außen ragenden Flansch zur Befestigung der Aufnahme (4) in dem Gehäuse (3) aufweist.

6. Verschluss nach Anspruch 4 oder 5, **dadurch gekennzeichnet, dass** die Aufnahme (4) zusätzlich eine die innere Hülse (16) zumindest bereichsweise umgreifende äußere Hülse (17) aufweist, die mit dem Gehäuse (3), insbesondere über ein Gewinde (15), verbunden ist, wobei in einem zwischen der inneren Hülse (16) und der äußeren Hülse (17) ausgebildeten Ringraum das zweite Sperrelement (6) verschiebbar geführt ist.

7. Verschluss nach einem der vorhergehenden Ansprüche, **dadurch gekennzeichnet, dass** der Verriegelungszapfen (1) über ein Gewinde (10) mit einem Aufnahmefuß (2) verbunden ist, der ggf. Durchgangsöffnungen (12) zur Anbindung an ein erstes Bauteil (23) aufweist.

8. Verschluss nach einem der vorhergehenden Ansprüche, **dadurch gekennzeichnet, dass** das Gehäuse (3) Durchgangsöffnungen (14) zur Anbindung an ein zweites Bauteil (22) aufweist.

9. Verschluss nach einem der vorhergehenden Ansprüche, **dadurch gekennzeichnet, dass** der Verriegelungszapfen (1) und der ggf. vorgesehene Aufnahmefuß (2) eine axiale Durchgangsöffnung (9) aufweisen.

10. Verschluss nach einem der vorhergehenden Ansprüche mit einem zusätzlichen elastischen Element (24), das zur Erzeugung einer auf den Verriegelungszapfen (1) wirkenden Axialkraft zwischen dem Verriegelungszapfen (1) und der Aufnahme (4) angeordnet ist.

11. Verkleidungssystem, insbesondere Innenverkleidung für Fahr- oder Flugzeuge, mit einer ein erstes Bauteil bildenden Tragstruktur (22) und einer mittels wenigstens eines Verschlusses nach einem der vorhergehenden Ansprüche an dieser lösbar befestigten Verkleidungsplatte (23), die ein zweites Bauteil bildet, wobei die Aufnahme (4) und/oder das Gehäuse (3) des Verschlusses an der Tragstruktur (22) befestigt sind und der Verriegelungszapfen (1) an der Verkleidungsplatte (23) befestigt ist.

12. Verkleidungssystem nach Anspruch 11 mit einem Verschluss nach Anspruch 10, wobei das elastische Element (24) unter Vorspannung zwischen der Tragstruktur (22) und der Verkleidungsplatte (23) angeordnet ist.

## Claims

1. A closure for the detachable connection of parts (22, 23) having
- a locking pin (1), which has at least one first depression (8) and means (2, 12) for connection to a first part (23),
- a housing (3),
- a receptacle (4), which is arranged in the housing (3) and has at least one second depression (18) and an opening into which the locking pin (1) can be inserted,
- at least one first blocking element (5), which is accommodated in the at least one second depression (18) and can be brought into detachable engagement with the at least one first depression (8) to lock the locking pin (1) in the receptacle (4),
- a second blocking element (6), which is accommodated movably in the housing (3) and/or receptacle (4), and
- a spring (7) loading the second blocking element (6) in a first direction,
wherein the second blocking element (6) can be moved, counter to the force of the spring (7), in a second direction opposite the first direction from a locking position, which brings the first blocking element (5) into engagement with the at least one first depression (8), into a release position, in which the first blocking element (5) can be disengaged from the at least one first depression (8),
wherein the second blocking element (6) has a guide contour (19), which effects a radial movement component of the at least one first blocking element (5) when there is an axial force acting on the second blocking element (6) in the first direction,
and wherein the at least one first depression (8) of the locking pin (1) has a guide contour (20), which effects a radial movement component of the at least one first blocking element (5) when there is a tensile force acting on the locking pin (1),
**characterised in that**
the spring (7) is a compression spring supported on the second blocking element (6) and on the housing (3),
and, when the tensile force exceeds a predefined value, the at least one first blocking element (5) is displaced radially outwards, wherein the second blocking element (6) is moved in the second direction counter to the force of the spring (7), as a result of which the closure opens automatically as soon as the predefined tensile force is exceeded.

2. The closure according to Claim 1,
**characterised in that**
the first depression provided in the locking pin (1) is a circumferential groove (8).

3. The closure according to Claim 1 or 2,
**characterised in that**
the at least one second depression provided in the receptacle (4) is an in particular cylindrical through-opening (18).

4. The closure according to any one of the preceding claims,
**characterised in that**
the receptacle (4) has an inner sleeve (16) which defines the opening and in which the at least one second depression (18) is provided.

5. The closure according to Claim 4,
**characterised in that**
the sleeve (16) has a radially outwardly pointing flange for fastening the receptacle (4) in the housing (3) .

6. The closure according to Claim 4 or 5,
**characterised in that**
the receptacle (4) also has an outer sleeve (17), which fits around at least some regions of the inner sleeve (16) and is connected to the housing (3), in particular by means of a thread (15), wherein the second blocking element (6) is guided slidably in an annular space formed between the inner sleeve (16) and the outer sleeve (17).

7. The closure according to any one of the preceding claims,
**characterised in that**
the locking pin (1) is connected via a thread (10) to a receiving foot (2), which may have through-openings (12) for attachment to a first part (23).

8. The closure according to any one of the preceding claims,
**characterised in that**
the housing (3) has through-openings (14) for attachment to a second part (22).

9. The closure according to any one of the preceding claims,
**characterised in that**
the locking pin (1) and the receiving foot (2) which may be provided have an axial through-opening (9).

10. The closure according to any one of the preceding claims, having an additional elastic element (24), which is arranged between the locking pin (1) and the receptacle (4) to generate an axial force acting on the locking pin (1).

11. A cladding system, in particular, interior cladding system for vehicles or aircraft, having a support structure (22), which forms a first part, and a cladding board (23), which is fastened detachably to said support structure by means of at least one closure according to any one of the preceding claims and forms a second part, wherein the receptacle (4) and/or the housing (3) of the closure are fastened to the support structure (22) and the locking pin (1) is fastened to the cladding board (23).

12. The cladding system according to Claim 11, having a closure according to Claim 10, wherein the elastic element (24) is arranged under prestress between the support structure (22) and the cladding board (23).

## Revendications

1. Fermeture pour la liaison réversible de composants (22,23) comportant :
- un tourillon de verrouillage (1), qui présente au moins une première cavité (8) et un moyen (2,12) de liaison avec un premier composant (23),
- un logement (3),
- un réceptacle (4) disposé dans le logement (3), qui présente au moins une deuxième cavité (18) ainsi qu'une ouverture, dans laquelle le tourillon de verrouillage (1) peut être enfoncé,
- au moins un premier élément de blocage (5), qui est renfermé dans au moins une deuxième cavité (18) et peut être amené de manière réversible en prise avec au moins une première cavité (8) pour arrêter le tourillon de verrouillage (1) dans le réceptacle (4),
- un deuxième élément de blocage (6), qui est renfermé de manière mobile dans le logement (3) et/ou le réceptacle (4) et
- un ressort (7) sollicitant le deuxième élément de blocage (6) dans une première direction,
dans laquelle le deuxième élément de blocage (6) doit être déplacé dans une deuxième direction opposée à la première direction à partir d'une position de verrouillage amenant le premier élément de blocage (5) en prise avec au moins une première cavité (8) en sens contraire à la force du ressort (7) dans une position de déblocage, dans laquelle le premier élément de blocage (5) peut être mis hors prise d'au moins une première cavité (8),
dans laquelle le deuxième élément de blocage (6) présente un contour de guidage (19), qui en présence d'une force axiale agissant sur le deuxième élément de blocage (6) dans la première direction provoque un composant de mouvement radial d'au moins un premier élément de blocage (5),
dans laquelle au moins une première cavité (8) du tourillon de verrouillage (1) présente un contour de guidage (20), qui en présence d'une force de traction agissant sur le tourillon de verrouillage (1) provoque un composant de mouvement radial d'au moins un premier élément de blocage (5),
**caractérisée en ce que**
le ressort (7) est un ressort de pression s'appuyant sur le deuxième élément de blocage (6) et sur le logement (3),
et **en ce que**, lorsque la force de traction dépasse une valeur prescrite, au moins un premier élément de blocage (5) est refoulé radialement vers l'extérieur, dans laquelle le deuxième élément de blocage (6) est déplacé en sens contraire à la force du ressort (7) dans la deuxième direction, moyennant quoi la fermeture s'ouvre automatiquement, dès que la force de traction prescrite est dépassée.

2. Fermeture selon la revendication 1, **caractérisée en ce que** la première cavité prévue dans le tourillon de verrouillage (1) est une rainure circonférentielle (8) .

3. Fermeture selon la revendication 1 ou 2, **caractérisée en ce que** au moins une deuxième cavité prévue dans le réceptacle (4) est une ouverture traversante (18), notamment cylindrique.

4. Fermeture selon une des revendications précédentes, **caractérisée en ce que** le réceptacle (4) présente un manchon intérieur (16), qui définit l'ouverture et est prévu dans au moins une deuxième cavité (18).

5. Fermeture selon la revendication 4, **caractérisée en ce que** le manchon (16) présente une bride dépassant radialement vers l'extérieur pour fixer le réceptacle (4) dans le logement (3).

6. Fermeture selon la revendication 4 ou 5, **caractérisée en ce que** le réceptacle (4) présente en outre un manchon extérieur (17) entourant au moins par portions le manchon intérieur (16), qui est relié avec le logement (3), notamment par l'intermédiaire d'un filetage (15), dans laquelle dans un espace annulaire réalisé entre le manchon intérieur (16) et le manchon extérieur (17) le deuxième élément de blocage (6) est guidé de manière coulissante.

7. Fermeture selon une des revendications précédentes, **caractérisée en ce que** le tourillon de verrouillage (1) est relié par l'intermédiaire d'un filetage (10) avec un pied de réceptacle (2), qui présente le cas échéant des ouvertures traversantes (12) à des fins de liaison à un premier composant (23).

8. Fermeture selon une des revendications précédentes, **caractérisée en ce que** le logement (3) présente des ouvertures traversantes (14) à des fins de liaison à un deuxième composant (22).

9. Fermeture selon une des revendications précédentes, **caractérisée en ce que** le tourillon de verrouillage (1) et le pied de réceptacle (2) prévu le cas échéant présentent une ouverture traversante axiale (9).

10. Fermeture selon une des revendications précédentes comportant un élément élastique supplémentaire (24), qui est disposé afin de générer une force axiale agissant sur le tourillon de verrouillage (1) entre le tourillon de verrouillage (1) et le réceptacle (4).

11. Système d'habillage notamment habillage intérieur pour véhicules automobiles ou avions, comportant une structure porteuse (22) formant un premier composant et une plaque d'habillage (23) fixée à celles-ci au moyen d'au moins une fermeture selon une des revendications précédentes, qui forme un deuxième composant, dans lequel le réceptacle (4) et/ou le logement (3) de la fermeture sont fixés sur la structure porteuse (22) et le tourillon de verrouillage (1) est fixé sur la plaque d'habillage (23) .

12. Système d'habillage selon la revendication 11 comportant une fermeture selon la revendication 10, dans lequel l'élément élastique (24) est disposé sous une précontrainte entre la structure porteuse (22) et la plaque d'habillage (23).
